# EUROPEAN PATENT APPLICATION

(11) **EP 4 818 128 A1**
(43) Date of publication of application: **07.10.2026**
(21) Application number: 26164390.2
(22) Date of filing: 12.03.2026
(51) Int. Cl.: C02F 1/461, C02F 1/467, C25B 1/26, C25B 11/051

(54) **FINE BUBBLE GENERATOR AND WET-AREA DEVICE**

(30) Priority: 31.03.2025 JP 2025059239; 28.01.2026 JP 2026012533
(71) Applicant: TOTO LTD., Kokurakita-ku Kitakyushu-shi, Fukuoka 802-8601 (JP)
(72) Inventor: Nakamura, Shoma, Kitakyushu-shi, 802-8601 (JP); Hijikata, Ryojiro, Kitakyushu-shi, 802-8601 (JP); Sato, Motokazu, Kitakyushu-shi, 802-8601 (JP); Hayata, Kenichiro, Kitakyushu-shi, 802-8601 (JP); Ito, Hiroki, Kitakyushu-shi, 802-8601 (JP)
(74) Representative: Bandpay & Greuter

(57) **Abstract**

A fine bubble generator includes an electrolytic cell and a controller, in which the electrolytic cell includes an inlet of water, an outlet of water, and an electrode located inside the electrolytic cell; the controller is configured to control an electrical energization of the electrode to generate fine bubbles in the electrolytic cell; and the controller is configured to electrically energize the electrode when water is flowing into the electrolytic cell through the inlet and flowing out of the electrolytic cell through the outlet.

## Description

### TECHNICAL FIELD

Embodiments of the present invention relate generally to a fine bubble generator and a wet-area device.

### BACKGROUND

Bubbles are generated in water containing chloride ions by electrolyzing the water. It is desirable for a fine bubble generator to efficiently generate fine bubbles.

### PRIOR ART

### Patent Document

[Non-Patent Literature 1] Proceedings of the Hokkaido Chapter of the Japan Society of Civil Engineers, No. 72, 2015, "Flow analysis of fine bubbles generated during electrolysis of NaCl solution"

### SUMMARY OF THE INVENTION

Embodiments of the present invention are based on a recognition of these problems, and are directed to a fine bubble generator and a wet-area device that can efficiently generate fine bubbles.

A first aspect of the present invention includes: an electrolytic cell including an inlet of water, an outlet of water, and an electrode located inside the electrolytic cell; and a controller configured to control an electrical energization of the electrode to generate fine bubbles in the electrolytic cell, in which the controller is configured to electrically energize the electrode when water is flowing into the electrolytic cell through the inlet and flowing out of the electrolytic cell through the outlet.

According to the fine bubble generator, fine bubbles can be efficiently generated by electrically energizing the electrode when water is flowing through the electrolytic cell.

A second aspect is the fine bubble generator according to the first aspect, further including a flow velocity regulator configured to regulate a flow velocity of water in the electrolytic cell.

According to the fine bubble generator, the flow velocity in the electrolytic cell can be set to a flow velocity at which fine bubbles are easily generated in water.

A third aspect is the fine bubble generator according to the second aspect, in which the flow velocity regulator is configured to regulate an average flow velocity of water along the electrode to be 0.28 meters per second or more when the controller is electrically energizing the electrode.

According to the fine bubble generator, more fine bubbles are easily generated in water.

A fourth aspect is the fine bubble generator according to the third aspect, in which the flow velocity regulator is configured to regulate the average flow velocity of the water along the electrode to be 0.28 meters per second or more and 0.84 meters per second or less when the controller is electrically energizing the electrode.

According to the fine bubble generator, more fine bubbles are easily generated in water.

A fifth aspect is the fine bubble generator according to the second aspect, in which the flow velocity regulator is a pressure regulator valve positioned upstream of the electrolytic cell.

According to the fine bubble generator, fluctuation of the flow velocity of the water supplied to the electrolytic cell can be suppressed.

A sixth aspect is the fine bubble generator according to any one of the first to third aspects, in which the controller is configured to set an available chlorine concentration of water electrolyzed by the electrolytic cell to be 0.1 ppm or more and 5.0 ppm or less.

According to the fine bubble generator, the number of bubbles is easily changed by controlling the current of the electrode. For example, standards of the WHO Guidelines for Drinking-water Quality and standards based on the Waterworks Act of Japan can be satisfied.

A seventh aspect is the fine bubble generator according to any one of the first to third aspects, in which the electrolytic cell includes an electrode including a base body and a catalyst layer, in which the base body includes at least one of titanium or a titanium alloy, and the catalyst layer is located on the base body and includes a platinum group element; and the controller is configured to produce water including the fine bubbles and hypochlorous acid by electrolyzing the water by electrically energizing the electrode.

According to the fine bubble generator, a sterilization effect due to the hypochlorous acid is obtained.

An eighth aspect is a wet-area device, including: the fine bubble generator according to any one of the first to third aspects; and a water discharger configured to discharge, in a mist-like form, water flowing out from the outlet, in which the controller is configured to perform the control so that bubbles included in water electrolyzed by the electrolytic cell are only bubbles having volume equivalent diameters less than an average particle size of the mist-like water discharged by the water discharger.

According to the wet-area device, it is expected that the mist-like discharge of the water discharger can be prevented from becoming unstable due to, for example, large bubbles.

According to embodiments of the present invention, a fine bubble generator and a wet-area device that can efficiently generate fine bubbles are provided.

### BRIEF DESCRIPTION OF THE DRAWINGS

FIG. 1 is a block diagram illustrating a wet-area device according to an embodiment;
FIGS. 2A to 2C are schematic views illustrating an evaluation method of a number of bubbles;
FIG. 3 is a schematic view illustrating the evaluation method of the number of bubbles;
FIG. 4 is a graph illustrating a relationship between the available chlorine concentration and the number concentration;
FIG. 5 is a graph illustrating a relationship between the flow rate and the number concentration;
FIG. 6 is a histogram illustrating a distribution of particle sizes of bubbles in electrolyzed water;
FIG. 7 is a histogram illustrating a distribution of particle sizes of bubbles in electrolyzed water;
FIG. 8 is a histogram illustrating a distribution of particle sizes of bubbles in electrolyzed water;
FIG. 9 is a histogram illustrating a distribution of particle sizes of bubbles in electrolyzed water;
FIG. 10 is a histogram illustrating a distribution of particle sizes of bubbles in electrolyzed water;
FIG. 11 is a schematic view illustrating the vicinity of an electrode surface of an electrolytic cell during electrolysis;
FIG. 12 is a graph comparing evaluation methods of bubbles;
FIG. 13 is a graph illustrating particle sizes of bubbles according to an image analysis method and a laser diffraction scattering method;
FIGS. 14A and 14B are histograms illustrating distributions of particle sizes of bubbles in electrolyzed water;
FIGS. 15A and 15B are histograms illustrating distributions of particle sizes of bubbles in electrolyzed water;
FIGS. 16A and 16B are histograms illustrating distributions of particle sizes of bubbles in electrolyzed water;
FIGS. 17A and 17B are histograms illustrating distributions of particle sizes of bubbles in electrolyzed water; and
FIGS. 18A and 18B are histograms illustrating distributions of particle sizes of bubbles in electrolyzed water.

### DETAILED DESCRIPTION

Embodiments of the present invention will now be described with reference to the drawings. Similar components in the drawings are marked with the same reference numerals; and a detailed description is omitted as appropriate.

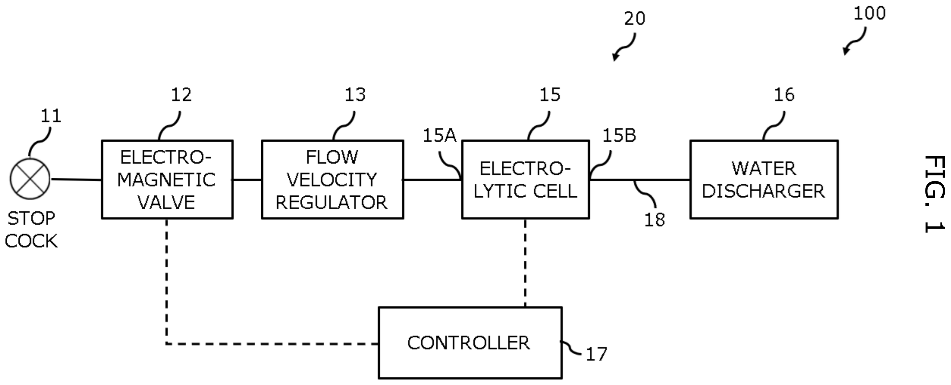

FIG. 1 is a block diagram illustrating a wet-area device according to an embodiment.

As illustrated in FIG. 1, the wet-area device 100 according to the embodiment includes a fine bubble generator 20 and a water discharger 16. The fine bubble generator 20 includes an electromagnetic valve 12, a flow velocity regulator 13, an electrolytic cell 15, and a controller 17. The wet-area device 100 is a device that produces functional water from water supplied from the upstream side of a stop cock 11, and discharges the produced functional water from the water discharger 16.

The components of the wet-area device 100 may not always be located inside the same enclosure, and may be located separately. For example, the water discharger 16 may be located separately from the housing in which the electrolytic cell 15 is located.

Specifically, examples of the wet-area device include a urinal device, a device (e.g., a system-bath or the like) located in a bath room or a bathtub, an automatic faucet apparatus, a washing makeup stand, a kitchen set, and a sanitary washing device located in a flush toilet device or a flush toilet.

The water discharger 16 is, for example, a device that includes a discharge port, and may include a nozzle. For example, washing is performed with the water discharged from the water discharger 16. For example, when the wet-area device 100 is a urinal device, the water discharger 16 discharges functional water into the urinal as wash water that washes the interior of the urinal. For example, when the wet-area device 100 is a device located in a bath room or a bathtub, the water discharger 16 discharges water onto a wash place floor, etc. The water discharger 16 may include a shower head. For example, when the wet-area device 100 is a washing makeup stand, the water discharger 16 discharges water onto a bowl. For example, when the wet-area device 100 is a kitchen set, the water discharger 16 discharges water into a sink. For example, when the wet-area device 100 is a flush toilet device, the water discharger 16 discharges functional water into a flush toilet as wash water that washes the interior of the flush toilet.

As illustrated in FIG. 1, a water supply source (not illustrated), the stop cock 11, the electromagnetic valve 12, the flow velocity regulator 13, the electrolytic cell 15, and the water discharger 16 are arranged in this order from the upstream side along a flow channel 18 of water to be discharged from the water discharger 16.

The stop cock 11 opens and closes the flow channel 18 between the water supply source and the electromagnetic valve 12. The stop cock 11 switches between water supply and stop to the electromagnetic valve 12. The water supply source is, for example, a service water line. In other words, for example, tap water is supplied to the electromagnetic valve 12, the flow velocity regulator 13, and the electrolytic cell 15. For example, water that includes chloride ions is supplied to the electromagnetic valve 12, the flow velocity regulator 13, and the electrolytic cell 15.

The electromagnetic valve 12 opens and closes the flow channel 18 between the stop cock 11 and the flow velocity regulator 13. The electromagnetic valve 12 switches between water supply and stop to the flow velocity regulator 13 and the electrolytic cell 15. Water from the electromagnetic valve 12 is supplied to the electrolytic cell 15 via the flow velocity regulator 13.

The electrolytic cell 15 is a device that converts water supplied from the upstream side into functional water. The functional water that is produced by the electrolytic cell 15 is water that includes fine bubbles. The functional water that is produced by the electrolytic cell 15 may be water that includes fine bubbles and a sterilizing function. For example, the electrolytic cell 15 has a fine bubble generation function of generating fine bubbles in water, and a function of providing a sterilizing function in which water is provided with a sterilizing function by electrolysis. The function of providing the sterilizing function is, for example, a function of electrolyzing tap water to produce water (sterilizing water) to have a sterilizing function. The water discharger 16 discharges the functional water generated by the electrolytic cell 15.

For example, the sterilizing function improves the chemical washing effect. For example, the fine bubbles improve the physical washing effect. The water discharger 16 discharges water that includes fine bubbles and a sterilizing function, which improves the washing performance due to the effects of both the sterilizing function and the fine bubbles.

The sterilizing water includes, for example, sterilizing components. Specifically, the sterilizing water may be ozone water, hypochlorous acid-containing water, aqueous hydrogen peroxide, or silver ion-containing water.

For example, tap water or other water that includes chloride ions is changed by electrolysis into water that includes hypochlorous acid. For example, the electrolytic cell 15 produces hypochlorous acid-containing water by electrolyzing tap water.

Or, the electrolytic cell 15 may include an electrode that elutes sterilizing metal ions (e.g., silver ions) into tap water by electrolyzing tap water. For example, a voltage may be applied between an anode that includes silver (or a metal including silver) and a cathode to electrolyze water flowing between the anode and the cathode, thereby emitting silver ions from the anode into the water.

The fine bubbles that are generated by the fine bubble generation function of the electrolytic cell 15 are bubbles having volume equivalent diameters of less than 100 µm. Herein, bubbles that have volume equivalent diameters of less than 100 µm are referred to as fine bubbles (registered trademark; hereinafter omitted). Fine bubbles are classified into microbubbles and ultra-fine bubbles (registered trademark; hereinafter omitted). Microbubbles are fine bubbles that have volume equivalent diameters of 1 µm or more and less than 100 µm. Ultra-fine bubbles are fine bubbles that have volume equivalent diameters of less than 1 µm. Bubbles are defined according to JIS B 8741-1:2019. The fine bubble generation function may generate microbubbles and ultra-fine bubbles.

In the example, the sterilizing water is hypochlorous acid-containing water. The electrolytic cell 15 includes a pair of electrodes. For example, the pair of electrodes are flat plates arranged parallel to each other to face each other. In the example, the arithmetic average height Sa (defined in ISO 25178) of the electrode surface is about 0.2 µm (0.15 µm or more and 0.25 µm or less). For example, each of the electrodes of the electrolytic cell 15 includes a base body including at least one of titanium or a titanium alloy, and a catalyst layer that is located on the base body and includes a platinum group element. In the example, the catalyst layer is iridium oxide, etc. A voltage is applied between the pair of electrodes; the electrodes are electrically energized; and the tap water flowing between the electrodes is electrolyzed. Hypochlorous acid is generated from chlorine ions in the tap water. The washing performance can be improved by the sterilization effect of hypochlorous acid.

The fine bubble generation function of the electrolytic cell 15 generates fine bubbles by electrolyzing tap water or other water containing chloride ions. For example, the electrolytic cell 15 generates fine bubbles in a liquid inside the electrolytic cell 15 by electrolyzing tap water. In the electrolysis that generates hypochlorous acid as described above, for example, gases such as H₂, O₂, etc., are generated at the surfaces of the electrodes. The gases that are generated separate from the electrodes and become fine bubbles in the water.

Thus, in the example, the electrolytic cell 15 electrolyzes tap water to produce sterilizing water and generate fine bubbles, thereby producing sterilizing water that includes fine bubbles.

The controller 17 is, for example, a control circuit that includes a CPU, etc. The controller 17 controls operations of the electromagnetic valve 12 and the electrolytic cell 15. In other words, the controller 17 controls the opening and closing of the electromagnetic valve 12. The controller 17 switches between electrically energizing and stopping the electrical energization of the electrodes of the electrolytic cell 15. By controlling the electrical energization of the electrodes of the electrolytic cell 15, the controller 17 electrolyzes water inside the electrolytic cell 15 to generate fine bubbles inside the electrolytic cell 15.

The electrolytic cell 15 includes an inlet 15a through which water from the upstream side flows into the electrolytic cell 15, and an outlet 15b through which water flows downstream out of the electrolytic cell 15. The water that flows in through the inlet 15a passes between the electrodes performing electrolysis to generate hypochlorous acid and fine bubbles, and flows out through the outlet 15b. When the electromagnetic valve 12 or the like is controlled so that water flows into the electrolytic cell 15 through the inlet 15a and flows out of the electrolytic cell 15 through the outlet 15b, the controller 17 controls the electrical energization of the electrodes of the electrolytic cell 15 to electrolyze the water to generate hypochlorous acid and fine bubbles in the water.

According to investigation results of the inventors of the application, it was found that fine bubbles can be efficiently generated by electrically energizing the electrodes when water is flowing through the electrolytic cell 15. For example, the force of the flow of water inside the electrolytic cell 15 causes the bubbles generated at the electrode surface of the electrolytic cell 15 to separate from the electrode surface more easily. For example, the bubbles separate from the electrode surface before reaching 100 µm or more in diameter, and thereby become fine bubbles in the water.

The flow velocity regulator 13 regulates the flow velocity of the water inside the electrolytic cell 15. The flow velocity regulator 13 may be a flow regulator that regulates the flow rate in the electrolytic cell 15. The flow regulator may be, for example, a metering valve or other flow regulating valve. The flow velocity regulator 13 may include a flow regulating valve (an electromagnetic valve or the like) that can be controlled by the controller 17. The flow velocity regulator 13 is not limited thereto; and the flow velocity regulator 13 may be any device that can regulate the flow velocity of the water inside the electrolytic cell 15 by any technique.

The flow velocity regulator 13 regulates the flow velocity between the electrodes of the electrolytic cell 15 (at the electrode surface vicinity). For example, by including the flow velocity regulator 13, water discharge can be realized at the optimal flow rate for generating fine bubbles. Although the flow velocity regulator 13 is located upstream of the electrolytic cell 15 in the example, the flow velocity regulator 13 may be located downstream of the electrolytic cell 15.

The water discharger 16 sprays (discharges in a mist-like form) water that includes fine bubbles and a sterilizing function. For example, it is expected that water scattering can be suppressed because the sterilizing water that includes fine bubbles is discharged in a mist-like form. The average particle size of the mist-like water may be, for example, about 200 µm or more and about 1,500 µm or less. Herein, the average particle size refers to the equivalent diameter defined as the Sauter mean (total volume/total area) based on the particle size distribution obtained by Fraunhofer diffraction analysis using a He-Ne laser.

For example, the concentration (the available chlorine concentration) of sterilizing components in the functional water can be regulated by the current value supplied to the electrodes of the electrolytic cell 15. For example, the available chlorine concentration increases as the current value increases. As described below, the fine bubble concentration (the number of fine bubbles per unit volume), the fine bubble size, etc., can be regulated by regulating the flow velocity between the electrodes of the electrolytic cell 15 (at the electrode surface vicinity) and the available chlorine concentration of the functional water.

An evaluation of the number of bubbles generated by the electrolysis of the electrolytic cell will now be described.

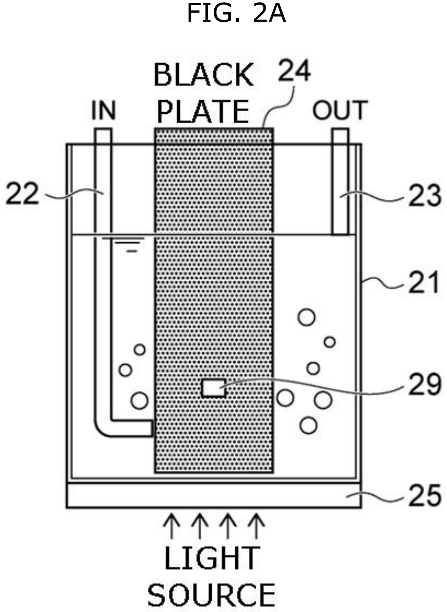

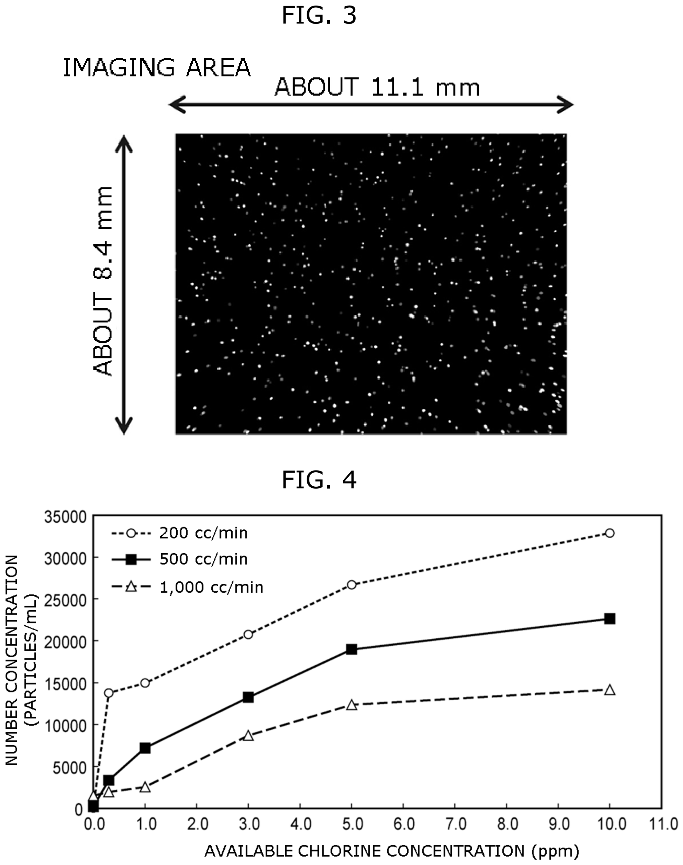

FIGS. 2A to 2C and FIG. 3 are schematic views illustrating an evaluation method of the number of bubbles.

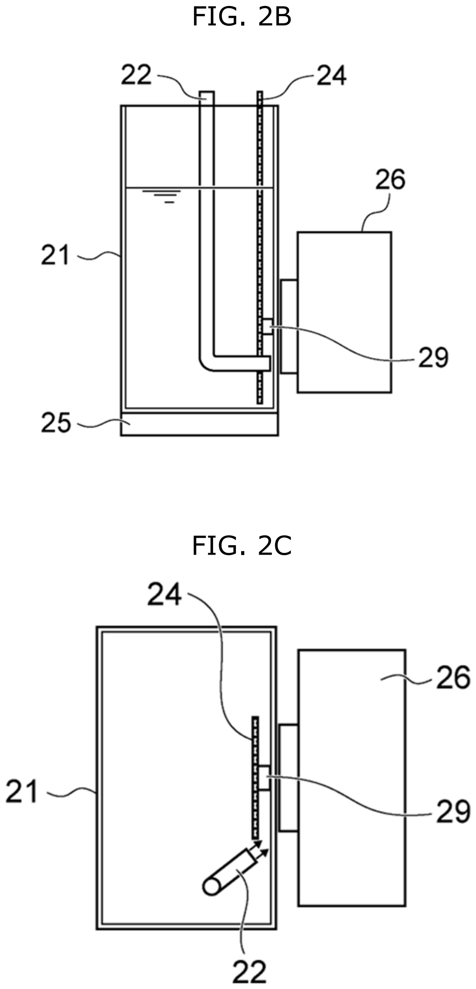

FIG. 2A is a front view; FIG. 2B is a side view; and FIG. 2C is a top view.

A tube 22 is connected to the outlet 15b of the electrolytic cell 15 outside the drawing. Water (electrolyzed water) that includes bubbles and hypochlorous acid is produced by the electrolysis of the electrolytic cell 15. The electrolyzed water that is produced by the electrolytic cell 15 is supplied to the interior of a water tank 21 by the tube 22. A tube 23 includes a suction opening that suctions electrolyzed water from the interior of the water tank 21 to maintain the water level inside the water tank 21.

A black plate 24 is located inside the water tank 21. The discharge port of the tube 22 discharges the electrolyzed water between the black plate 24 and the wall (the front glass) of the water tank 21. A light source 25 that illuminates the interior of the water tank 21 is located below the water tank 21.

Bubbles that pass through the gap (1.1 mm) between the black plate 24 and the water tank 21 are imaged. In other words, a camera 26 images an imaging area 29 between the black plate 24 and the wall of the water tank 21 via the wall of the water tank 21. An image of the bubbles positioned within the imaging area 29 can be taken. By analyzing the image, the number (the concentration) of bubbles in the electrolyzed water is evaluated. FIG. 3 is an example of the image.

More detailed evaluation conditions are as follows.
1. Device configuration
   ·A glass water tank having inner dimensions of size 94 wide×140 high×61 deep (mm) was used.
   ·A black plate made by applying a black coating to the backside of a soda-lime glass plate was prepared. This black plate was used as the background of the captured image.
   ·The black plate was bonded to another smooth plate used as the framework of the black plate.
   ·Brass plates having thicknesses of 0.28 mm were used as spacers, and were sandwiched between the flat plate of the framework and the glass water tank. The number of spacers was adjusted to set the gap between the glass water tank and the black plate (the uncoated surface) to be about 1.1 mm.
   ·A water channel was configured using a polyurethane tube having an inner diameter of 2.99 mm and a total length of about 2,800 mm, a small pump, and an electrolytic cell (TOTO product number: TCM1451).
   ·Purified water was placed in a 5 L polyethylene tank; and an amount of sodium chloride corresponding to the target available chlorine concentration was dissolved.
   ·A stabilized power supply supplied power to each of the small pump and the electrolytic cell.
   ·The glass water tank was illuminated from below with a panel light.
   ·A digital camera (Tough TG-6 manufactured by Olympus Corporation) was used.
   ·Camera imaging settings:
      Imaging mode: microscope mode (macro imaging)
      ISO sensitivity: 12800
      Aperture stop: F4.5
      Focal length: 9 mm
      Metering mode: -2.0
      Shutter speed: 160/200/250/320 (automatically set based on subject brightness according to camera specifications)
      Pixel size: 4,000×3,000
      Compression ratio: 1/2.7
   ·Effects of light other than the panel light were minimized when imaging by covering the entire glass water tank and digital camera with a light-shielding cloth.
2. Preparation
   ·The glass water tank and the black plate were washed beforehand to prevent adhesion of the generated bubbles that may interfere with the imaging.
   ·Washing was performed by polishing with alumina (No. 2,000), washing with an alkaline cleaning agent, and then replacing the remaining water with purified water. High hydrophilicity was provided thereby.
   ·After washing, the position of the black plate with respect to the front surface of the glass water tank was fixed using foam material, clips, and the spacers.
   ·The discharge port was fixed using foam material and clips. The discharge port was directed toward the gap between the glass water tank and the black plate, and positioned to directly discharge into the imaging area.
   ·The suction opening was fixed with a clip to be positioned about 30 mm from the upper end of the glass water tank.
3. Imaging conditions
   ·The imaging angle of view was about 11.1 mm wide×8.4 mm long (calculated values).
   ·If water is flowing when imaging, the bubbles appear as streaks, and so the imaging was performed immediately after instantaneously stopping the water discharge.
   ·Images were taken three times at each condition.
4. Electrolysis
   ·The voltage value and current value of the stabilized power supply connected to the small pump were set to provide the specified flow rate.
   ·The voltage value and current value of the stabilized power supply connected to the electrolytic cell were set to provide the specified available chlorine concentration.
   ·The small pump at the water intake side for maintaining the water level was set to a sufficient voltage value and current value to prevent the overflow of water, and was driven continuously.
5. Image analysis
   ·A self-made program (Python) capable of calculating the number and size of the particles was used to perform image analysis of the captured images.
   ·The image file (4,000×3,000 pixels) was imported into the program in grayscale; and the pixel information was converted into a numerical sequence. The grayscale format expressed the brightness shading from 0 to 255 (black to white).
   ·Binarization was performed using a threshold of 70.
   ·Morphological transformations were performed twice to close minimum regions (white) of noise, and to fill flaws (black) inside the bubble regions.
   ·Regions (white) in which two or more bubbles overlapped in the image were discriminated as different particles by a watershed algorithm.
   ·The bubble particles were counted. The number of pixels of each bubble particle also was output so that the particle sizes could be calculated based on the sizes inside the image.
   ·The number and particle size distribution of the bubbles inside the image were output as analysis results.
6. Analysis result processing
   ·The bubble particle sizes were calculated by separately imaging a JIS Class 1 ruler at the same angle of view and by adjusting the scale.
   ·The volume of the imaging area was converted into 1 mL; and the number concentration per mL was calculated.

FIGS. 4 to 10 illustrate evaluations of electrolyzed water by the method described above with reference to FIGS. 2A to 3.

FIG. 4 is a graph illustrating a relationship between the available chlorine concentration and the number concentration.

The available chlorine concentration (ppm (mg/L)) corresponds to the hypochlorous acid concentration in the electrolyzed water. The available chlorine concentration was measured by DPD. A handheld residual chlorine meter DR300 (manufactured by DKK-TOA Corporation) was used as the measuring instrument; and a free chlorine reagent (manufactured by HACH) was used as the measurement reagent. The number concentration was the number of bubbles per unit volume of the electrolyzed water. FIG. 4 illustrates when electrolysis was performed with water flowing through the electrolytic cell 15 at flow rates of 200 cc/min, 500 cc/min, and 1,000 cc/min. FIG. 4 shows data at which the available chlorine concentration was 0 ppm, 0.3 ppm, 1 ppm, 3 ppm, 5 ppm, and 10 ppm.

It can be seen from FIG. 4 that the bubble number concentration increased as the flow rate decreased. When the available chlorine concentration was more than 0 ppm and 5.0 ppm or less, the bubble number concentration had an increasing trend as the available chlorine concentration increased. On the other hand, when the available chlorine concentration was more than 5.0 ppm, the trend of the number concentration increasing relative to the available chlorine concentration increase was slightly less.

For example, according to the embodiment, the controller 17 electrically energizes the electrodes of the electrolytic cell 15 so that the available chlorine concentration of the water electrolyzed by the electrolytic cell 15 is more than 0 ppm (e.g., 0.1 ppm or more) and 5.0 ppm or less. As a result, for example, the number of bubbles is easily changed by controlling the current values of the electrodes. In other words, for example, when the available chlorine concentration is more than 0 ppm and 5.0 ppm or less, the number of fine bubbles (e.g., microbubbles) in the electrolyzed water changes linearly relative to the available chlorine concentration. For example, standards of the WHO Guidelines for Drinking-water Quality can be satisfied. For example, standards based on the Enforcement Regulations of the Waterworks Act, i.e., the available chlorine concentration being 0.1 ppm or more at the terminal water supply cock, can be satisfied.

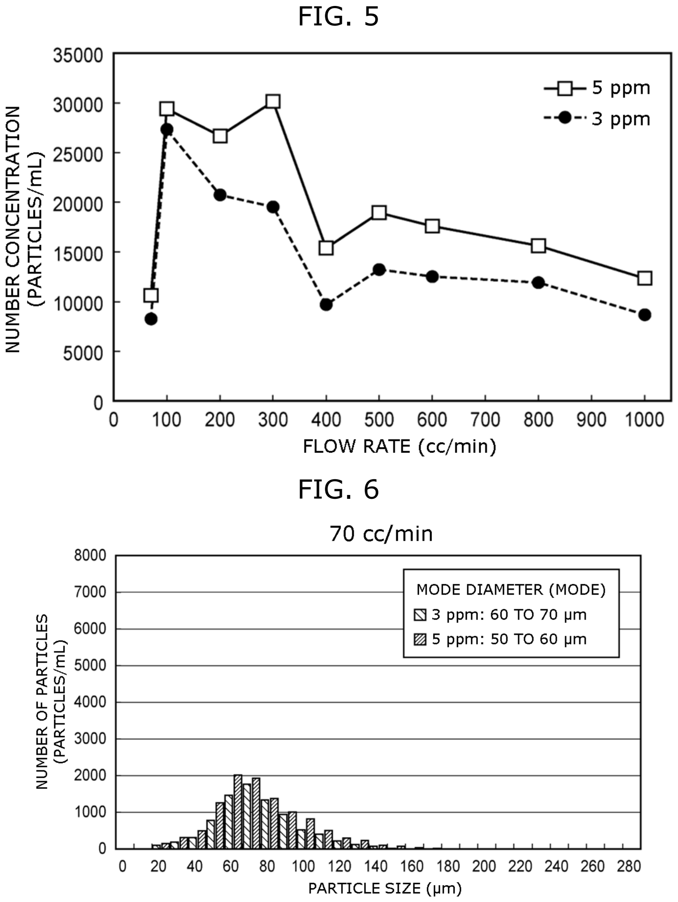

FIG. 5 is a graph illustrating a relationship between the flow rate and the number concentration.

FIG. 5 illustrates when the available chlorine concentration was 3 ppm and 5 ppm for electrolyzed water generated by the electrolytic cell 15 through which water was flowing at each flow rate.

The bubble number concentration was lowest at an extremely low flow rate of 70 cc/min. The bubble number concentration tended to have a maximum when the flow rate was about 100 cc/min. The bubble number concentration had a decreasing trend as the flow rate increased from 100 cc/min. It is considered that the electrolysis efficiency decreased as the flow rate increased, which caused the bubble amount per unit volume to decrease. It is desirable for the flow rate in the electrolytic cell 15 to be, for example, 100 cc/min or more and 600 cc/min or less. For example, the fine bubble generator 20 produces functional water with a microbubble concentration of 5,000 (bubbles/ml) or more, and favorably 10,000 (bubbles/ml) or more. The microbubble concentration of the functional water may be 35,000 (bubbles/ml) or less.

FIGS. 6 to 10 are histograms illustrating distributions of particle sizes of bubbles in electrolyzed water.

Each histogram illustrates the number of bubbles (the number of particles) every 10 µm of bubble particle sizes. For example, the number of particles at the 40 µm graduation of the horizontal axis illustrates the number of bubbles having a particle size of more than 30 µm and 40 µm or less. The particle size may be considered to correspond to the volume equivalent diameter assuming a sphere.

FIG. 6 illustrates when the flow rate in the electrolytic cell 15 was 70 cc/min.

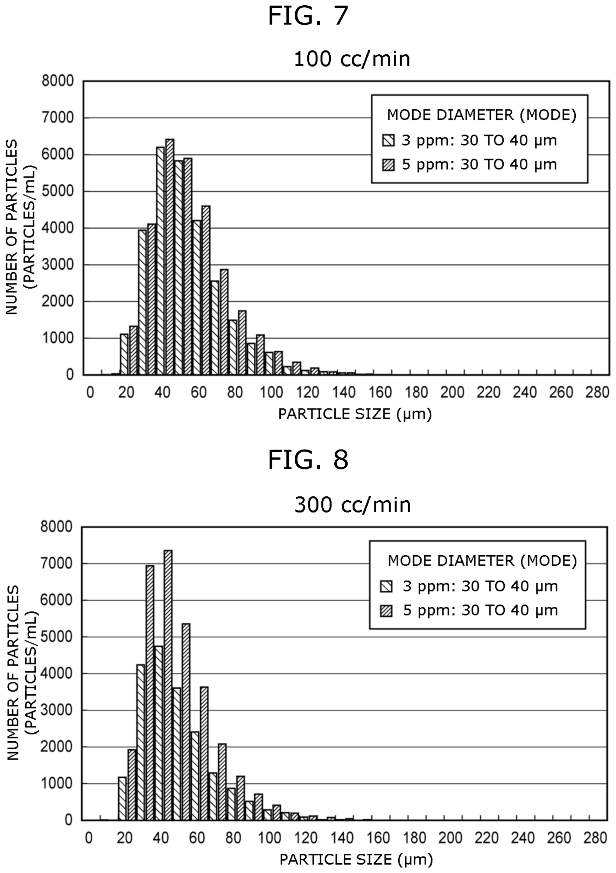

FIG. 7 illustrates when the flow rate in the electrolytic cell 15 was 100 cc/min.

FIG. 8 illustrates when the flow rate in the electrolytic cell 15 was 300 cc/min.

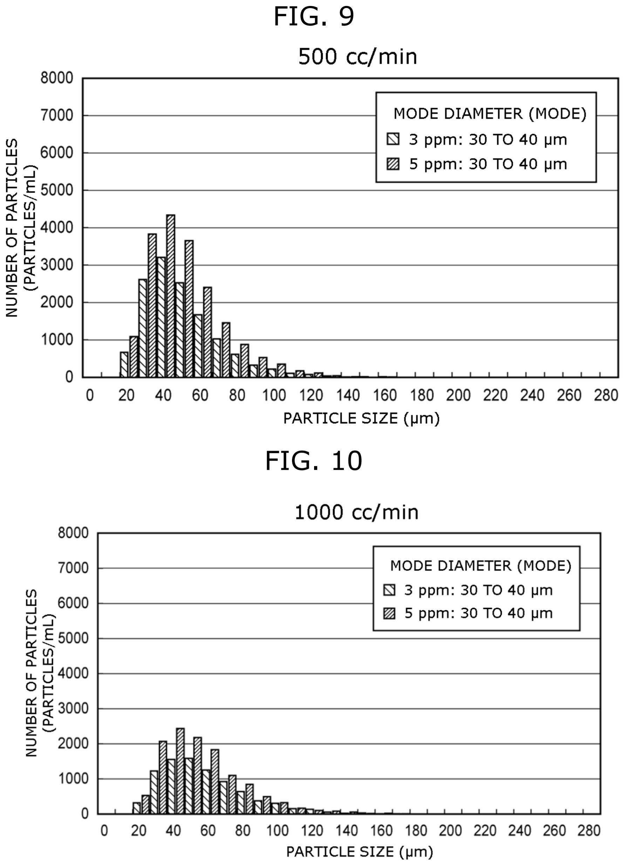

FIG. 9 illustrates when the flow rate in the electrolytic cell 15 was 500 cc/min.

FIG. 10 illustrates when the flow rate in the electrolytic cell 15 was 1,000 cc/min.

The flow velocity between the electrodes of the electrolytic cell 15 can be calculated by dividing the flow rate between the electrodes of the electrolytic cell 15 by the flow channel cross-sectional area. For example, when the flow rate was 100 cc/min, the flow velocity was calculated to be 0.28 m/sec. For example, when the flow rate was 300 cc/min, the flow velocity was calculated to be 0.84 m/sec.

FIGS. 6 to 10 each illustrate when the available chlorine concentration was 3 ppm and 5 ppm for electrolyzed water generated by the electrolytic cell 15 through which water was flowing at each flow rate. The mode diameter is the mode of the number of particles.

It can be seen from FIGS. 6 and 7 that the number of particles rapidly increased as the flow rate increased from 70 cc/min to 100 cc/min. For example, it is desirable for the flow rate to be 100 cc/min or more. As a result, more fine bubbles can be generated in water.

It would be expected that if the total number of particles was constant, the number of bubbles per unit amount of water would have a decreasing trend because the water amount increases as the flow rate increases. In contrast, the number of particles when the flow rate was 100 cc/min or more was higher than when the flow rate was 70 cc/min. Furthermore, the mode diameter was 50 to 60 µm (or 60 to 70 µm) when the flow rate was 70 cc/min as in FIG. 6, whereas the mode diameter had a relatively low value of 30 to 40 µm when the flow rate was 100 cc/min or more as in FIG. 7. Thus, in the range in which the flow rate was less than 100 cc/min, for example, the mode diameter became relatively small and the total number of particles increased as the flow rate increased.

On the other hand, as in FIGS. 8 to 10, for example, the mode diameter remained at about 30 to 40 µm when the flow rate was 100 cc/min or more (300 cc/min, 500 cc/min, and 1,000 cc/min). In the range in which the flow rate was 100 cc/min or more, for example, relatively many particles of about 30 to 40 µm could be generated.

As in FIG. 5 above, it can be seen that the number concentration decreased when the flow rate exceeded 300 cc/min. For example, it is more desirable for the flow rate to be 100 cc/min or more and 300 cc/min or less. In other words, it is more desirable for the flow velocity to be 0.28 m/sec or more and 0.84 m/sec or less.

For example, the flow velocity regulator 13 regulates the average flow velocity of the water between the electrodes to be 0.28 m/sec or more and 0.84 m/sec or less when the controller 17 electrically energizes the electrodes of the electrolytic cell 15. As a result, more fine bubbles can be generated in water.

For example, a pressure regulator valve can be used as the flow velocity regulator 13. As described with reference to FIG. 1, the flow velocity regulator 13 is positioned upstream of the electrolytic cell 15. By using such a flow velocity regulator 13, for example, fluctuation of the flow velocity of the water supplied to the electrolytic cell 15 can be suppressed even when the primary pressure fluctuates. For example, the flow velocity supplied to the electrolytic cell 15 can be maintained at a prescribed stable value regardless of pressure fluctuation of the primary pressure. For example, damage of the electrolytic cell 15 can be suppressed because the primary pressure is applied to the upstream side of the flow velocity regulator 13. The flow velocity regulator 13 is not limited to the configuration described above; the flow velocity regulator 13 may not always be upstream of the electrolytic cell 15, and may be located downstream of the electrolytic cell 15.

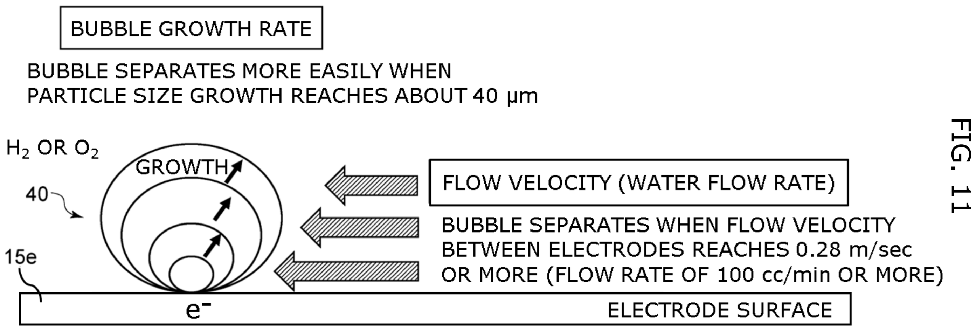

FIG. 11 is a schematic view illustrating the vicinity of an electrode surface of an electrolytic cell during electrolysis.

A bubble 40 is generated at the electrode 15e surface by electrolysis of the tap water in the electrolytic cell 15. The bubble 40 separates from the electrode 15e more easily as the bubble 40 becomes large. For example, it is considered that the bubble 40 separates easily from the electrode 15e when the particle size becomes about 40 µm. Separation of the bubble 40 from the electrode 15e can be regulated by regulating the flow rate (the flow velocity). For example, the bubble 40 separates more easily from the electrode 15e when the flow rate (the flow velocity) is high. For example, it is considered that the bubble 40 stably separates easily from the electrode 15e when the flow velocity is about 0.28 m/sec or more. The size and the concentration of the bubbles in the electrolyzed water change according to the flow velocity. For example, if the bubbles 40 do not separate easily from the electrode 15e or the growth of the bubbles 40 is too fast, the bubbles 40 become larger than fine bubbles; and the number of fine bubbles does not easily increase. If the flow rate is too high, the amount of water increases, which may reduce the number of bubbles per unit amount of water.

For example, when the controller 17 controls the production of functional water by controlling the electrolytic cell 15, it is favorable for the bubbles included in the water electrolyzed by the electrolytic cell 15 (the water flowing out through the outlet 15b) to be only bubbles having particle sizes that are less than the average particle size of the mist-like water discharged by the water discharger 16. As a result, for example, it is expected that instability of the mist-like discharge of the water discharger 16 due to large bubbles can be suppressed.

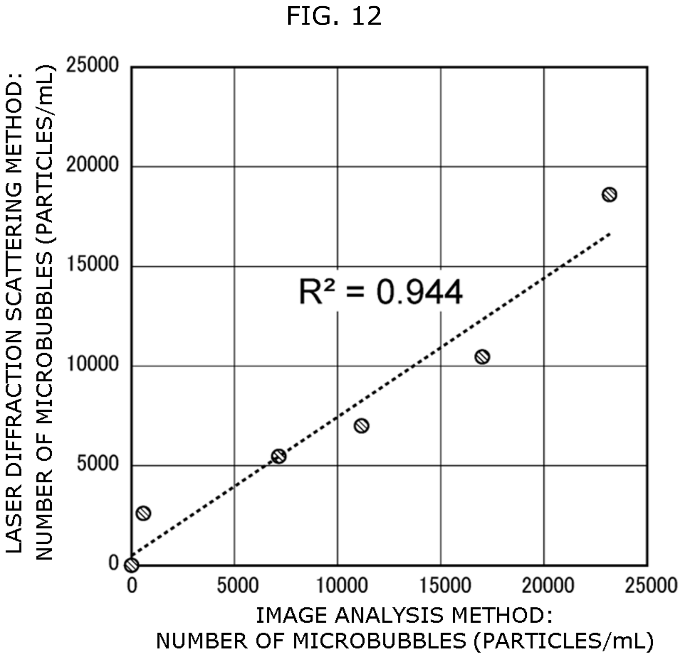

In addition to the evaluation method described above with reference to FIGS. 2A to 3 (hereinbelow, referred to as the image analysis method), evaluation methods of bubbles include the laser diffraction scattering method. The laser diffraction scattering method is a measurement technique in accordance with ISO standards. A comparison of the measurement methods will now be described with reference to FIGS. 12 to 18B. For the two measurement methods, the flow rate conditions of the water flowing through the electrolytic cell were the same; and electrolyzed water in which bubbles were generated at conditions to produce the same available chlorine concentration (0 ppm, 0.3 ppm, 1 ppm, 3 ppm, 5 ppm, and 10 ppm) were evaluated. SALD 7500 nano manufactured by Shimadzu Corporation was used in the laser diffraction scattering method.

FIG. 12 is a graph comparing the evaluation methods of the bubbles.

FIG. 12 compares the evaluation data by the image analysis method and the evaluation data by the laser diffraction scattering for the number of microbubbles. For the data by the two measurement methods, the correlation coefficient (R²) was 0.944; and an extremely high correlation was confirmed. This correlation indicates that the image analysis method matches the trend of the number concentration obtained by the laser diffraction scattering method, which is commonly used. It is considered that the image analysis method has sufficient measurement accuracy.

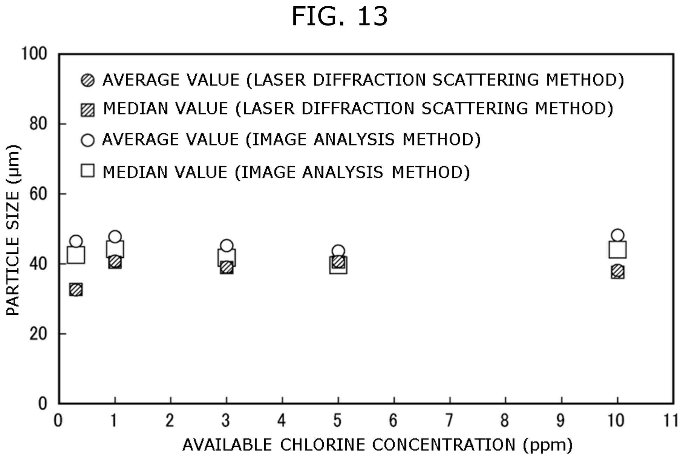

FIG. 13 is a graph illustrating particle sizes of bubbles according to the image analysis method and the laser diffraction scattering method.

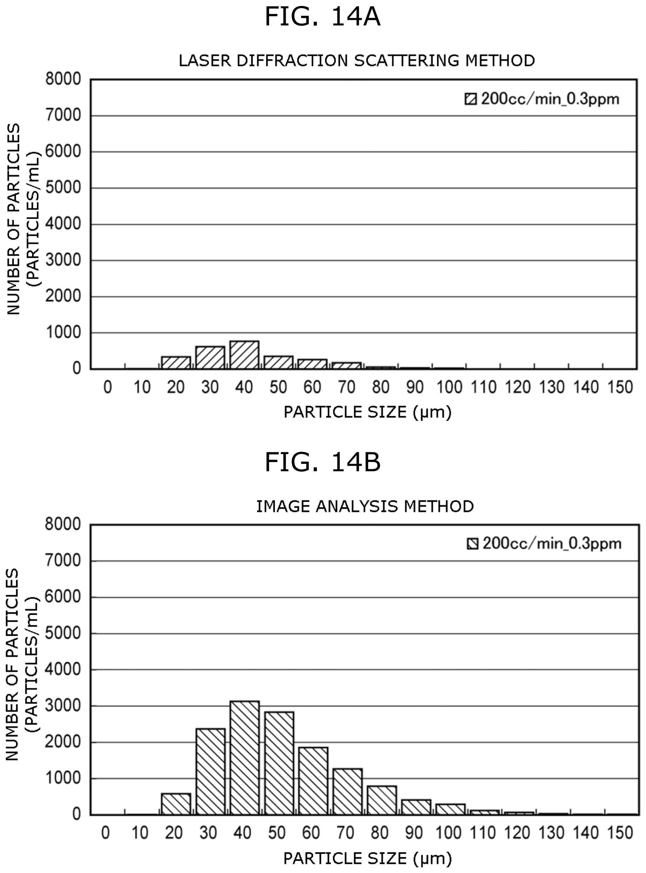

FIGS. 14A, 15A, 16A, 17A, and 18A are histograms illustrating distributions of particle sizes of bubbles in electrolyzed water according to the laser diffraction scattering method.

FIGS. 14B, 15B, 16B, 17B, and 18B are histograms illustrating distributions of particle sizes of bubbles in electrolyzed water according to the image analysis method.

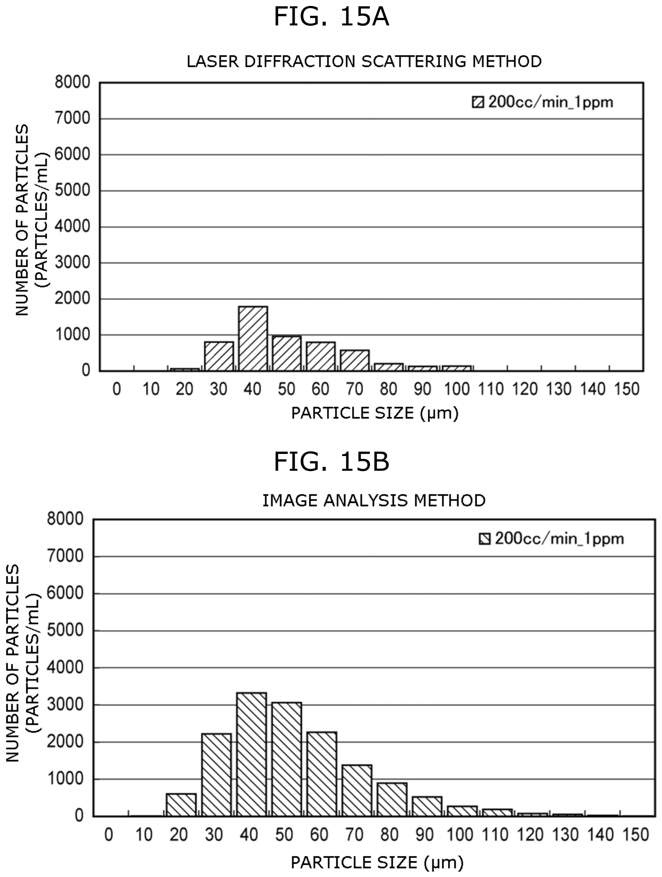

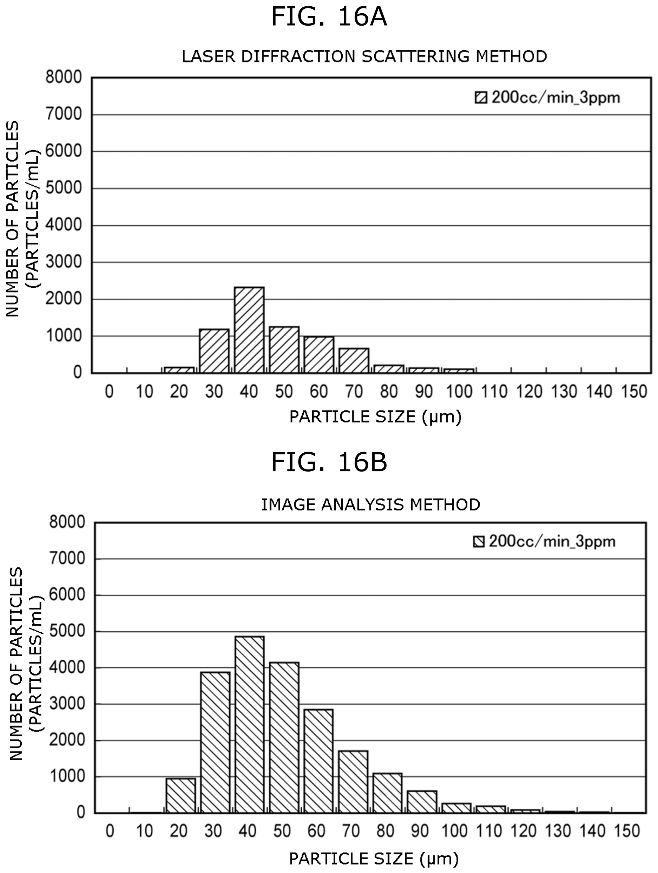

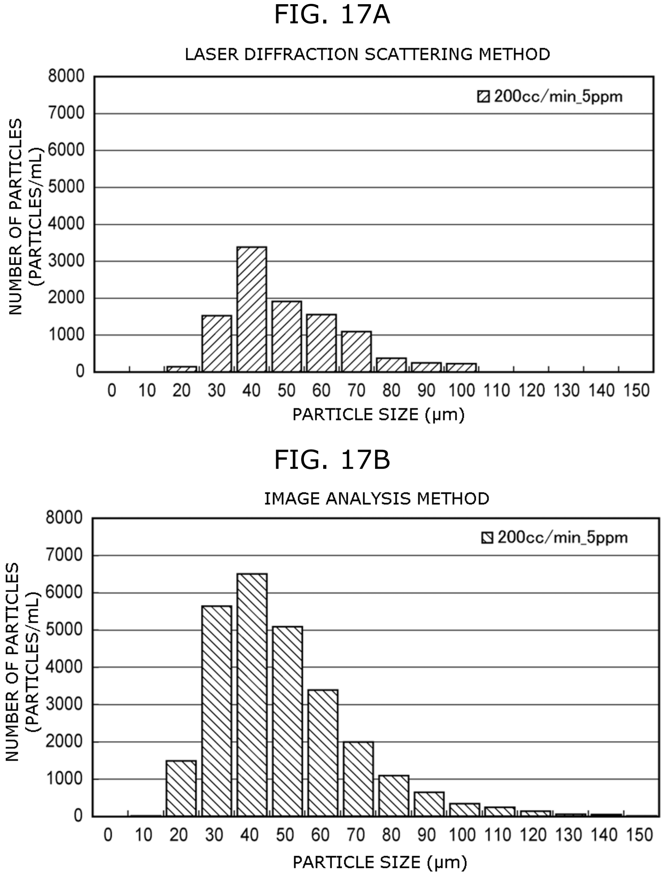

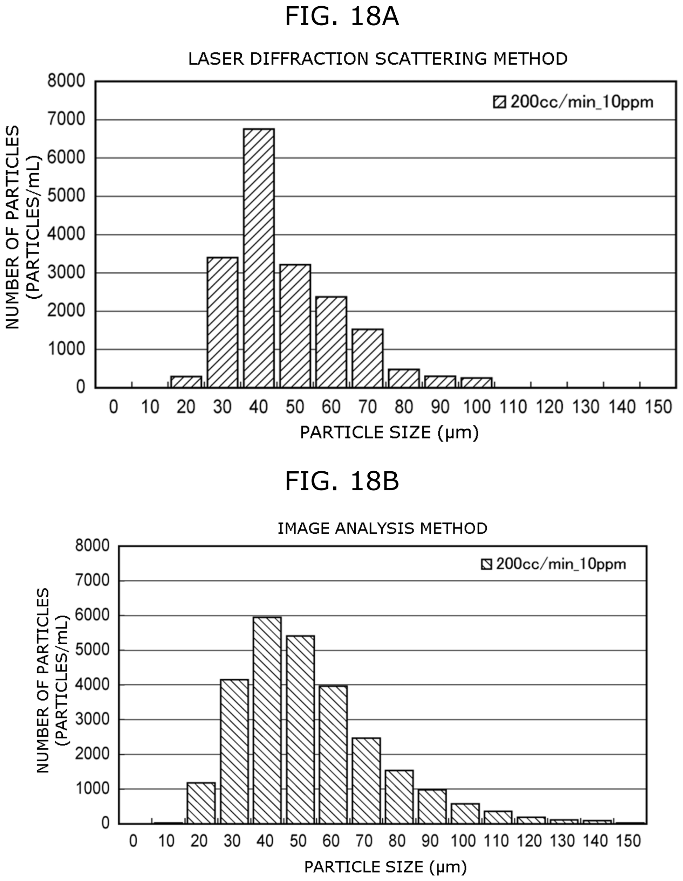

FIGS. 14A and 14B are for electrolyzed water having an available chlorine concentration of 0.3 ppm; FIGS. 15A and 15B are for electrolyzed water having an available chlorine concentration of 1 ppm; FIGS. 16A and 16B are for electrolyzed water having an available chlorine concentration of 3 ppm; FIGS. 17A and 17B are for electrolyzed water having an available chlorine concentration of 5 ppm; and FIGS. 18A and 18B are for electrolyzed water having an available chlorine concentration of 10 ppm. The flow rate of the electrolytic cell was 200 cc/min.

It can be seen from FIG. 13 that the average value and the median value were about 40 µm for both measurement methods. It can be seen from FIGS. 14A to 18B that the mode diameter (the mode) was 30 to 40 µm, and similar trends were observed for both measurement methods. It is considered that measurement accuracy equivalent to that of the laser diffraction scattering method was obtained for the image analysis method.

Embodiments may include the following Configurations.

### Configuration 1

A fine bubble generator, comprising:
an electrolytic cell including an inlet of water, an outlet of water, and an electrode located inside the electrolytic cell; and
a controller configured to control an electrical energization of the electrode to generate fine bubbles in the electrolytic cell, wherein
the controller is configured to electrically energize the electrode when water is flowing into the electrolytic cell through the inlet and flowing out of the electrolytic cell through the outlet.

### Configuration 2

The fine bubble generator according to Configuration 1, further comprising a flow velocity regulator configured to regulate a flow velocity of water in the electrolytic cell.

### Configuration 3

The fine bubble generator according to Configuration 2, wherein the flow velocity regulator is configured to regulate an average flow velocity of water along the electrode to be 0.28 meters per second or more when the controller is electrically energizing the electrode.

### Configuration 4

The fine bubble generator according to Configuration 3, wherein the flow velocity regulator is configured to regulate the average flow velocity of the water along the electrode to be 0.28 meters per second or more and 0.84 meters per second or less when the controller is electrically energizing the electrode.

### Configuration 5

The fine bubble generator according to Configuration 2, wherein the flow velocity regulator is a pressure regulator valve positioned upstream of the electrolytic cell.

### Configuration 6

The fine bubble generator according to any one of Configurations 1 to 5, wherein the controller is configured to set an available chlorine concentration of water electrolyzed by the electrolytic cell to be 0.1 ppm or more and 5.0 ppm or less.

### Configuration 7

The fine bubble generator according to any one of Configurations 1 to 6, wherein
the electrolytic cell includes an electrode including:
   a base body including at least one of titanium or a titanium alloy; and
   a catalyst layer located on the base body, the catalyst layer including a platinum group element, and
the controller is configured to produce water including the fine bubbles and hypochlorous acid by electrolyzing the water by electrically energizing the electrode.

### Configuration 8

A wet-area device, comprising:
the fine bubble generator according to any one of Configurations 1 to 7; and
a water discharger configured to discharge, in a mist-like form, water flowing out from the outlet, wherein
the controller is configured to perform the control so that bubbles included in water electrolyzed by the electrolytic cell are only bubbles having volume equivalent diameters less than an average particle size of the mist-like water discharged by the water discharger.

Hereinabove, embodiments of the present invention are described. However, the present invention is not limited to these descriptions. Appropriate design modifications of the embodiments above made by one skilled in the art also are within the scope of the present invention to the extent that the features of the present invention are included. For example, shapes, dimensions, material properties, arrangements, mounting forms, etc., of the components are not limited to those illustrated, and can be modified as appropriate.

The components included in the embodiments above can be combined within the limits of technical feasibility; and such combinations are within the scope of the present invention to the extent that the features of the present invention are included.

## Claims

1. A fine bubble generator (20), comprising:
an electrolytic cell (15) including an inlet of water (15a), an outlet of water (15b), and an electrode located inside the electrolytic cell; and
a controller (17) configured to control an electrical energization of the electrode to generate fine bubbles in the electrolytic cell, wherein
the controller is configured to electrically energize the electrode when water is flowing into the electrolytic cell through the inlet and flowing out of the electrolytic cell through the outlet.

2. The fine bubble generator according to claim 1, further comprising a flow velocity regulator configured to regulate a flow velocity of water in the electrolytic cell.

3. The fine bubble generator according to claim 2, wherein the flow velocity regulator is configured to regulate an average flow velocity of water along the electrode to be 0.28 meters per second or more when the controller is electrically energizing the electrode.

4. The fine bubble generator according to claim 3, wherein the flow velocity regulator is configured to regulate the average flow velocity of the water along the electrode to be 0.28 meters per second or more and 0.84 meters per second or less when the controller is electrically energizing the electrode.

5. The fine bubble generator according to any one of claims 2 to 4, wherein the flow velocity regulator is a pressure regulator valve positioned upstream of the electrolytic cell.

6. The fine bubble generator according to any one of claims 1 to 5, wherein the controller is configured to set an available chlorine concentration of water electrolyzed by the electrolytic cell to be 0.1 ppm or more and 5.0 ppm or less.

7. The fine bubble generator according to any one of claims 1 to 6, wherein the electrode is a pair of electrodes, and each electrode is disposed to face the other.

8. The fine bubble generator according to claim 7, wherein the pair of electrodes are flat plate electrodes arranged substantially parallel to each other.

9. The fine bubble generator according to any one of claims 1 to 8, wherein
the electrolytic cell includes an electrode including:
a base body including at least one of titanium or a titanium alloy; and
a catalyst layer located on the base body, the catalyst layer including a platinum group element, and
the controller is configured to produce water including the fine bubbles and hypochlorous acid by electrolyzing the water by electrically energizing the electrode.

10. The fine bubble generator according to any one of claims 1 to 9, wherein the controller is configured to control the electrical energization of the electrode so as to generate fine bubbles having volume equivalent diameters of less than 100 µm.

11. The fine bubble generator according to any one of claims 2 to 10, wherein the flow velocity regulator is configured to regulate a flow rate of water through the electrolytic cell to be 100 cc/min or more and 600 cc/min or less.

12. The fine bubble generator according to any one of claims 1 to 11, wherein the controller is configured to control the electrical energization of the electrode to produce functional water having a microbubble concentration of 5,000 bubbles/mL or more and 35,000 bubbles/mL or less.

13. A wet-area device, comprising:
the fine bubble generator according to any one of claims 1 to 12; and
a water discharger configured to discharge, in a mist-like form, water flowing out from the outlet, wherein
the controller is configured to perform the control so that bubbles included in water electrolyzed by the electrolytic cell are only bubbles having volume equivalent diameters less than an average particle size of the mist-like water discharged by the water discharger.
